(19) Europäisches Patentamt

European Patent Office

Office européen des brevets

(11) **EP 0 735 389 B1**

(12) **FASCICULE DE BREVET EUROPEEN**

(45) Date de publication et mention
de la délivrance du brevet:
**30.08.2006 Bulletin 2006/35**

(51) Int Cl.:
***G02B 6/12*** (2006.01)

(21) Numéro de dépôt: **96400668.8**

(22) Date de dépôt: **28.03.1996**

(54) **Structure à deux guides optiques insensible à la polarisation et procédé de réalisation**

Polarisationsunabhängige Struktur mit zwei optischen Wellenleitern und Herstellungsverfahren

Polarization independent structure with two optical waveguides and process of manufacturing

(84) Etats contractants désignés:
**DE GB**

(30) Priorité: **30.03.1995 FR 9503768**

(43) Date de publication de la demande:
**02.10.1996 Bulletin 1996/40**

(73) Titulaire: **Avanex Corporation
Fremont, CA 94538 (US)**

(72) Inventeurs:
• **Francois, Sandrine
75015 Paris (FR)**
• **Fouchet, Sylvie
92160 Antony (FR)**

(74) Mandataire: **Feray, Valérie et al
Feray Lenne Conseil
39/41, avenue Aristide Briand
92163 Antony (FR)**

(56) Documents cités:
**EP-A- 0 632 300          DE-A- 4 225 085
DE-A- 4 308 411**

• **APPLIED PHYSICS LETTERS, vol. 64, no. 18, 2 Mai 1994, pages 2335-2337, XP002006929 F. HEISMANN ET AL.: "Polarization-independent wavelength filter using a grating-assisted vertical directional coupler in InP"**
• **JOURNAL OF LIGHTWAVE TECHNOLOGY, vol. 12, no. 12, Décembre 1994, NEW YORK, pages 2056-2065, XP002006930 J. SU: "A New iterative Method for the Analysis of Longitudinally Invariant Waveguide Couplers"**
• **IEEE MTT-S INTERNATIONAL MICROWAVE SYMPOSIUM DIGEST, Boston, Massachusetts, 10-14 juin 1991, DIGEST, volume II, J. Hsu et al. 'Propagation Properies of XP002006932**
• **APPLIED PHYSICS LETTERS, vol. 59, no. 19, 4 Novembre 1991, NEW YORK, pages 2366-2368, XP002006931 M. CADA ET AL.: "Multiple-quantum-well nonlinear waveguide grating device"**

**EP 0 735 389 B1**

**Description**

La présente invention concerne le domaine général de l'opto-électronique et plus précisément, une structure à deux guides optiques pour coupleur directionnel, du type comprenant une couche de confinement inférieure, un coeur de guidage de la lumière et deux rubans pour charger le coeur et former les guides optiques.

On a proposé des coupleurs directionnels comportant une structure à deux guides optiques du type précité. Ces coupleurs connus ne fonctionnent cependant correctement que pour une polarisation prédéterminée de la lumière incidente. Cela pose problème lorsque des fibres optiques sont utilisées pour acheminer la lumière au coupleur, car ces dernières ne respectent pas de manière générale la polarisation de la lumière et en sortie des fibres optiques celle-ci est indéterminée.

Il existe donc un besoin pour disposer de structures à deux guides optiques pour coupleurs directionnels, qui fonctionnent indépendamment de la polarisation de la lumière incidente.

On a proposé dans la publication "Polarization-Independent Wavelength Filter Using a Grating-Assisted Vertical Directional Coupler in InP", ThP 12.5 page 69. F. Heismann et al., une structure à deux guides optiques superposés dans laquelle l'indépendance à la polarisation est obtenue en faisant varier le pas d'un réseau de couplage.

La présente invention a pour objet de proposer une structure à deux guides optiques pour un coupleur directionnel, qui soit insensible à la polarisation.

Elle y parvient en proposant une structure telle que définie dans la revendication 1.

L'invention a encore pour objet, un procédé pour réaliser une structure du type précité, insensible à la polarisation tel que défini dans la revendication 9.

Avantageusement, le procédé comprend en outre les étapes consistant à déposer par épitaxie sur une couche de confinement inférieure en matériau binaire, une couche massive en matériau quaternaire puis ladite succession de couches minces alternées, à mesurer par photo-luminescence la longueur d'onde de bande interdite du matériau quaternaire, à réaliser un masque puis à graver les rubans dans ladite succession de couches minces alternées.

D'autres caractéristiques et avantages de la présente invention apparaîtront à la lecture de la description détaillée qui suit, d'exemples de réalisation non limitatifs de l'invention, et à l'examen du dessin annexé sur lequel :

-    la figure 1 est une vue en perspective, schématique et partielle, d'une structure à deux guides optiques conforme à un premier exemple de réalisation de l'invention,
-    la figure 2 est une section transversale de la structure représentée sur la figure 1,
-    la figure 3 est une vue de dessus, schématique, de la structure représentée sur la figure 1,
-    la figure 4 montre l'évolution de la biréfringence d'un guide optique en fonction de l'épaisseur du ruban de charge, pour plusieurs valeurs de l'épaisseur du coeur.
-    la figure 5 est une vue analogue à la figure 4, pour trois valeurs particulières de l'épaisseur du coeur,
-    la figure 6 est une section transversale d'une structure conforme à un deuxième exemple de réalisation de l'invention,
-    la figure 7 est une vue de dessus correspondant à la structure représentée sur la figure 6, et
-    les figures 8 et 9 sont des réponses spectrales de filtres réalises conformément à l'invention, correspondant à la structure représentée sur les figures 6 et 7, pour deux valeurs de longueur d'onde de bande interdite du matériau quaternaire.

La description qui suit se fera en référence à un repère orthogonal XYZ. l'axe Z étant orienté verticalement.

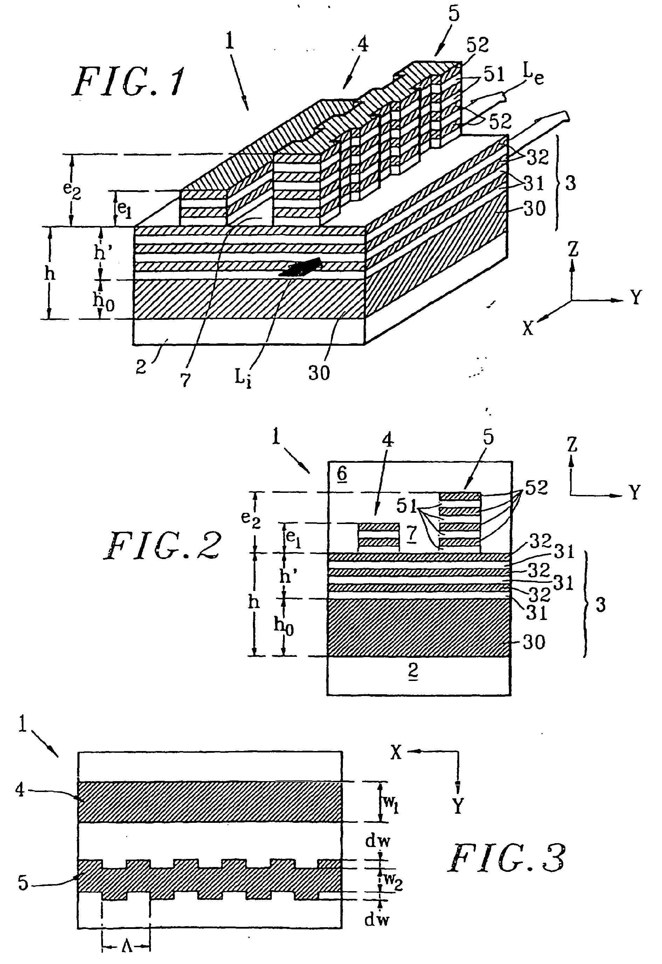

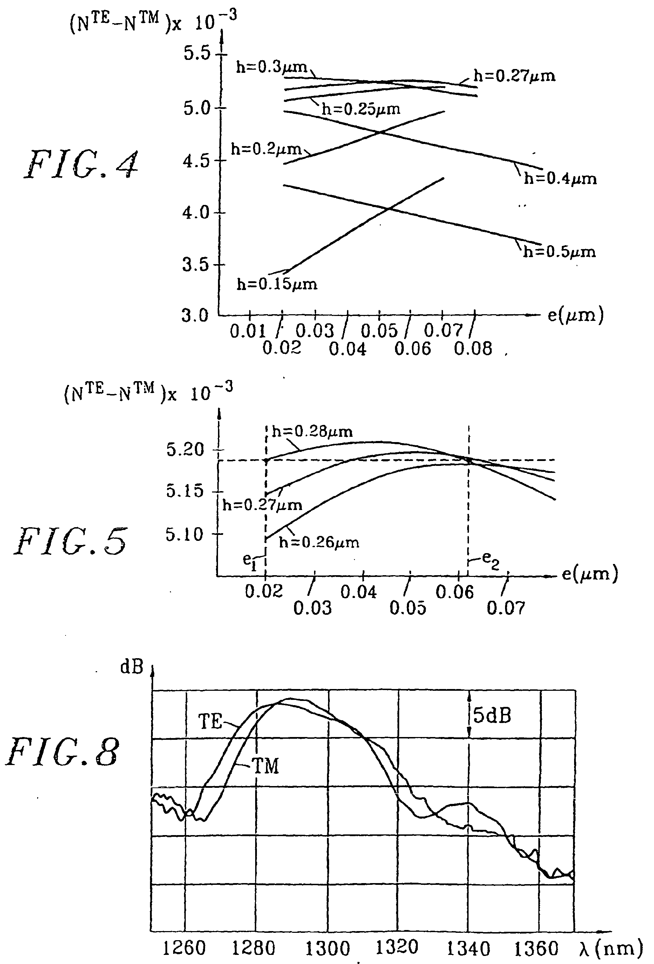

La structure 1 à deux guides optiques représentée sur les figures 1 à 3 est un coupleur directionnel asymétrique plan assisté par réseau. Bien entendu, ce coupleur pourrait être intégré avec d'autres composants optiques, électroniques ou opto-èlectroniques, sans sortir du cadre de la présente invention, au sein d'une structure monolithique.

La structure 1 comporte une couche de confinement inférieure 2 et un coeur 3 de guidage de la lumière, surmonté de deux rubans de charge 4 et 5 destinés à confiner latéralement la lumière dans le coeur 3 et former deux guides optiques, parallèles, monomodes, plans et chargés. L'indice de réfraction effectif du coeur 3 est supérieur à celui de la couche de confinement inférieure 2 et à celui des rubans de charge 4 et 5. Ces derniers et le coeur 3 sont recouverts par une couche de confinement supérieure 6 non représentée sur la figure 1, d'indice de réfraction inférieur à l'indice effectif du coeur et à celui des rubans de charge. Les rubans 4, 5 s'étendent longitudinalement dans la direction de l'axe X et sont séparés par une gorge 7. Le ruban de charge 4 présente une section transversale rectangulaire, de largeur (mesurée dans la direction de l'axe Y) égale à $w_1$, et d'épaisseur (mesurée dans la direction de l'axe Z) égale à et. Le ruban de charge 5 est gravé latéralement pour former un réseau de couplage de période $\wedge$ dans la direction de l'axe X. Il présente une section transversale rectangulaire. Cette section est composée de la réunion d'une partie centrale invariable de largeur constante $w_2$ et d'une partie latérale variable, de largeur dw, constituant une dent du réseau, et s'étendant de façon alternée de part et d'autre de ladite partie centrale. Les guides optiques associés aux rubans de charge 4 et 5 présentent des indices effectifs différents, respectivement égaux à $N_1$ et $N_2$. Le réseau de couplage gravé sur le ruban de charge 5 est conformé pour réaliser un accord de phase entre les deux guides optiques, pour une longueur d'onde particulière appelée longueur d'onde de Bragg $\lambda_B$, qui est également la longueur d'onde autour de laquelle est centrée la bande passante du filtre. Cette longueur d'onde de Bragg $\lambda_B$ vérifie la relation :

$$\lambda_B = \Lambda(N_1 - N_2). \qquad (1)$$

Lorsque la structure décrite est utilisée pour filtrer en longueur d'onde une lumière incidente $L_i$, celle-ci est envoyée en entrée sur un guide optique et l'onde lumineuse filtrée Le est recueillie sur l'autre guide optique en sortie. Pour la longueur d'onde de Bragg $\lambda_B$, le transfert d'énergie lumineuse d'un guide optique vers l'autre est maximum.

L'indépendance à la polarisation du filtre est obtenue lorsque :

$$\lambda_B{}^{TE} = \lambda_B{}^{TM}, \qquad (2)$$

c'est-à-dire lorsque les longueurs d'onde de Bragg $\lambda_B$ pour les modes de polarisation TE et TM sont égales.

Compte tenu de la relation (1) qui précède, la relation (2) s'écrit encore :

$$(N_1{}^{TE} - N_1{}^{TM}) = (N_2{}^{TE} - N_2{}^{TM}), \qquad (3)$$

ce qui signifie que les guides optiques d'indices effectifs $N_1$ et $N_2$ ont même biréfringence.

On a représenté sur les figures 4 et 5 l'évolution de la biréfringence NTE - NTM pour un guide optique monomode plan chargé, en fonction de l'épaisseur e du ruban de charge (en $\mu m$) et pour un ensemble de valeurs de l'épaisseur h du coeur 3. On remarquera que pour une valeur donnée de l'épaisseur h, il existe deux valeurs de l'épaisseur du ruban de charge $e_1$, $e_2$, pour lesquelles le guide optique présente la même biréfringence NTE - NTM.

L'invention exploite cette constatation et les épaisseurs $e_1$ et $e_2$ des rubans de charge 4 et 5 sont choisies en fonction de l'épaisseur h du coeur 3 de manière à ce que les guides optiques d'indices effectifs $N_1$ et $N_2$ aient même biréfringence.

On réalise le coeur 3 et les rubans de charge 4, 5 par dépôt successif de couches minces alternées, les épaisseurs du coeur 3 et des rubans de charge 4, 5 vérifiant la relation (3) précitée traduisant l'égalité des biréfringences des guides optiques.

Dans un exemple de réalisation préféré de l'invention, les diverses couches sont déposées par épitaxie en phase vapeur (MOCVD). La couche de confinement inférieure 2 est constituée en matériau binaire InP et elle est réalisée sur un substrat plan- On dépose ensuite, comme représenté plus particulièrement sur la figure 2. une couche massive 30 de matériau quaternaire InCaAsP, d'épaisseur $h_0$, puis une succession de couches minces alternées 31. 32 respectivement en matériau binaire InP et en matériau quaternaire InGaAsP. sur une épaisseur totale h'. Chaque couche mince 31 ou 32 présente une épaisseur inférieure ou égale à 200 Å. ce qui permet de contrôler l'épaisseur totale h = $h_0$ + h' de la couche de coeur 3 avec une précision de l'ordre de $\pm$ 100 Å. Le choix de l'épaisseur totale h dépend de la réponse spectrale souhaitée pour le filtre. Après réalisation du coeur 3. on dépose par épitaxie une succession de couches minces alternées 31, 52 respectivement en matériau binaire InP et en matériau quaternaire InGaAsP sur une épaisseur totale $e_2$. Chaque couche mince 51, 52 présente une épaisseur inférieure ou égale à 200 Å. On réalise un masque et l'on grave par attaque chimique, de manière connue en soi, les rubans de charge 4, 5 et le réseau de couplage. Les couches minces alternées 51 et 52 sont gravées après avoir caractérisé, par une mesure de photoluminescence, la longueur d'onde $\lambda_g$ caractéristique de la bande interdite du matériau quaternaire. Il est rappelé ici que l'indice de réfraction du matériau quaternaire dépend de la longueur d'onde $\lambda_g$, cette dernière pouvant être mesurée avec une précision de l'ordre de $\pm$ 20 nm. Après réalisation des rubans, l'ensemble est enterré par dépôt d'une couche de confinement supérieure 6 constituée en matériau binaire InP.

Plus précisément, dans l'exemple de réalisation des figures 1 à 3, on dépose par épitaxie seize couches minces alternées, dont quatre couches minces 31 d'InP et quatre couches minces 32 d'InGaAsP sur la couche massive 30, pour former le coeur 3, puis quatre couches minces 51 1 d'InP et quatre couches minces 52 d'InGaASP. Les rubans de charge 4 et 5 et le réseau de couplage sont gravés dans l'empilement de couches minces 1 et 52. Après gravure, le ruban 4 est constitué par l'empilement de quatre couches minces alternées 51 d'InP et 52 d'InGaAsP reposant sur le coeur 3. Le ruban 5 est constitué par l'empilement de huit couches minces alternées 51 1 d'InP et 52 d'InGaAsP reposant sur le coeur 3.

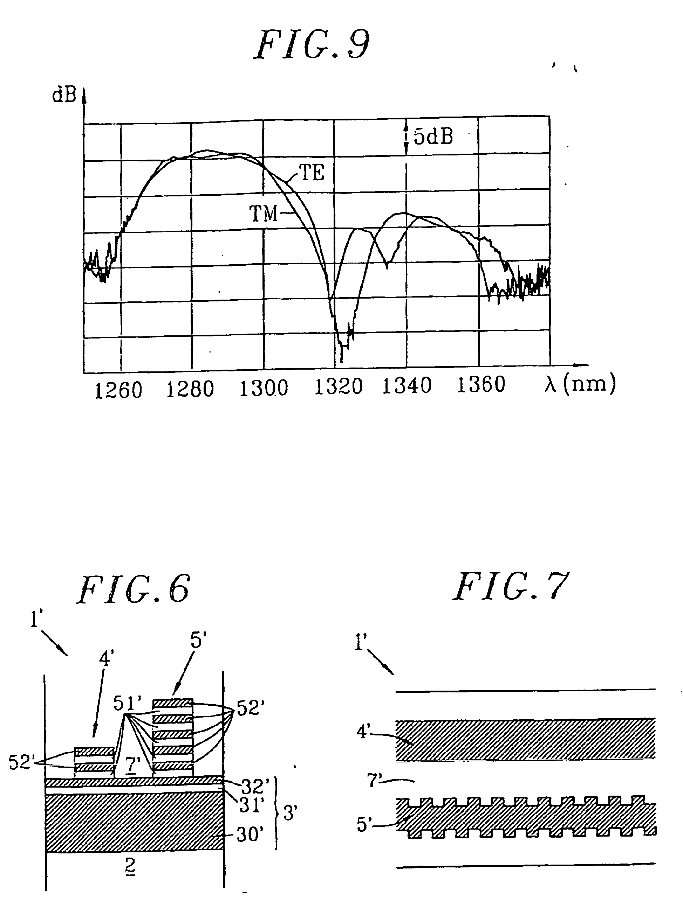

On a représenté sur les figures 6 et 7 une deuxième structure 1' conforme à l'invention. Cette structure diffère de la précédente par la géométrie, le nombre de couches minces alternées épitaxiées et la nature du matériau quaternaire utilisé. La structure l' comporte une couche de confinement inférieure 2 en matériau binaire InP identique à celle de la réalisation précédente. Le coeur 3' est formé d'un empilement d'une couche massive 3' en matériau quaternaire InGaAsP, d'épaisseur égale à 0,2 $\mu$m, d'une couche mince 31' en matériau binaire InP, de 200 Å d'épaisseur, et d'une couche mince 32' en matériau quaternaire InGaAsP, de 200 Å d'épaisseur. Le ruban 4' est constitué par un empilement de quatre couches minces alternées, chacune de 200 Å d'épaisseur, dont deux couches minces 51' en matériau binaire InP et deux couches minces 52' en matériau quaternaire InGaAsP. La largeur du ruban 4' vaut 1,16 $\mu$m. Le ruban 5' est formé par l'empilement de dix couches minces alternées chacune de 200 Å d'épaisseur, dont cinq couches minces 51' en matériau binaire InP et cinq couches minces 52' en matériau quaternaire InGaAsP. La largeur $w_2$ de la partie centrale de largeur constante du réseau gravé sur le ruban 5' vaut 1,6 $\mu$m et la largeur dw d'une dent vaut 0,6 $\mu$m. La largeur de la gorge 7' séparant les rubans 4' et 5' vaut 3 $\mu$m. La période $\Lambda$ du réseau de couplage vaut 127 $\mu$m.

On a représenté sur la figure 8 la réponse spectrale d'un filtre présentant une structure du type de celle décrite en référence aux figures 6 et 7, le matériau quaternaire utilisé InGaAsP présentant une longueur d'onde $\lambda_g$ de bande interdite égale à 1,17 $\mu$m. L'homme du métier remarquera à l'examen de la figure 8 que l'on obtient une bonne indépendance à la polarisation du filtre autour de la longueur d'onde centrale $\lambda$ = 1,28 $\mu$m.

On a représenté sur la figure 9 la réponse spectrale d'un filtre présentant une structure du type de celle décrite en référence aux figures 6 et 7, le matériau quaternaire présentant une longueur d'onde $\lambda_g$ de bande interdite égale à 1,19 $\mu$m,. Là encore, l'homme du métier appréciera l'insensibilité à la polarisation obtenue autour de la longueur d'onde centrale $\lambda$ = 1,28 $\mu$m.

Bien entendu, l'invention n'est pas limitée à l'exemple de réalisation décrit, et l'on peut utiliser à la place du matériau binaire InP un matériau binaire GaAs par exemple. Le réseau de couplage peut également être réalisé non plus en modulant la largeur du ruban mais son épaisseur. La structure décrite est du type à rubans enterrés. On peut, en variante, ne pas enterrer les rubans. L'invention s'applique encore à la réalisation de coupleurs symétriques, en particulier d'un séparateur de polarisation, et pourrait permettre par une mesure de la longueur d'onde centrale du filtre de contrôler l'indice effectif d'un guide isolé.

## Revendications

1. Structure (1 ; 1') à deux guides optiques pour coupleur directionnel asymétrique convenant pour réaliser un filtre, ladite structure comprenant une couche de confinement inférieure (2), un coeur (3 ; 3') de guidage de la lumière, et deux rubans (4, 5 ; 4', 5') pour charger le coeur (3, 3') et former les guide optiques, les épaisseurs ($e_1$, $e_2$) desdits rubans étant distinctes l'une de l'autre, et l'épaisseur (h) dudit coeur et les épaisseurs distinctes ($e_1$, $e_2$) desdits rubans étant choisies de manière à ce que les guides optiques aient même biréfrigence.

2. Structure selon la revendication 1, dans laquelle le coeur (3 ; 3') comporte un empilement d'une succession de couches minces alternées (31, 32 ; 31', 32') respectivement en matériau binaire et en matériau quaternaire.

3. Structure selon l'une des revendications 1 et 2, dans laquelle les rubans de charge (4, 5 ; 4', 5') comportent un empilement d'une succession de couches minces alternées (51, 52 ; 51', 52') respectivement en materiau binaire et en matériau quaternaire.

4. Structure selon l'une des revendications 2 et 3, dans laquelle l'épaisseur de chaque couche mince est inférieure ou égale à 200 Å.

5. Structure selon l'une des revendications 1 à 4, dans laquelle le coeur (3 ; 3') comporte une couche massive (30 ; 30') en matériau quaternaire.

6. Structure selon l'une des revendications 2 à 5, dans laquelle le matériau binaire est de l'InP et le matériau quaternaire de l'InGaAsP.

7. Structure selon l'une des revendications 1 à 6, dans laquelle un réseau de couplage est gravé sur l'un (5 ; 5') des rubans.

8. Structure selon l'une des revendications 1 à 7, dans laquelle les rubans (4, 5 ; 4', 5') sont enterrés.

9. Procède pour réaliser une structure (1; 1') à deux guides optiques pour coupleur directionnel asymétrique, ladite structure comprenant, une couche de confinement inférieure (2), un coeur (3 ; 3') de guidage de la lumière et deux rubans (4, 5 ; 4', 5') pour charger le coeur et former les guides optiques, les épaisseurs ($e_1$, $e_2$) desdits rubans étant distinctes, l'une de l'autre, ledit procédé comprenant l'étape consistant à déposer par épitaxie une succession de couches minces alternées, respectivement en matériau binaire et en matériau quaternaire, en vue d'obtenir après gravure des deux rubans, une épaisseur du coeur et des épaisseurs distinctes des deux rubans telles qu'elles conduisent à des guides optiques de même biréfringence.

10. Procédé selon la revendication 9, comprenant les étapes consistant à déposer par épitaxie sur une couche de confinement inférieure (2) en matériau binaire, une couche massive en matériau quaternaire (30; 30') puis ladite succession de couches minces alternées (31,32,51,52; 31',32',51',52'), à mesurer par photo-luminescence la longueur d'onde ($\lambda_g$) de bande interdite du matériau quaternaire, à réaliser un masque puis à graver les rubans (4, 5 ; 4'. 5') dans ladite succession de couches minces alternées.

11. Procédé selon l'une des revendications 9 et 10, en comprenant l'étape consistant à graver un réseau de couplage sur l'un (5 ; 5') des rubans de charge.

**Claims**

1. A structure (1; 1') having two light guides for an asymmetrical directional coupler, suitable for making a filter, said structure comprising a bottom confinement layer (2), a light-guiding core (3; 3'), and two ribbons (4, 5; 4', 5') for loading the core (3; 3') and for forming the light guides, the thicknesses ($e_1$, $e_2$) of said ribbons being different from each other, and the thickness (h) of said core and the distinct thicknesses ($e_1$, $e_2$) of said ribbons being selected in such a manner that the light guides have the same birefringence.

2. A structure according to claim 1, in which the core (3; 3') comprises a stack of a succession of alternating thin layers (31, 32; 31', 32') respectively of binary material and of quaternary material.

3. A structure according to claim 1 or claim 2, in which each load ribbon (4, 5; 4', 5') comprises a stack of a succession of alternating thin layers (51, 52; 51', 52') respectively of binary material and of quaternary material.

4. A structure according to claim 2 or claim 3, in which the thickness of each thin layer is less than or equal to 200 Å.

5. A structure according to any one of claims 1 to 4, in which the core (3; 3') includes a massive layer (30; 30') of quaternary material.

6. A structure according to any one of claims 2 to 5, in which the binary material is InP and the quaternary material is InGaAsP.

7. A structure according to any one of claims 1 to 6, in which a coupling grating is etched on one of the ribbons (5; 5').

8. A structure according to any one of claims 1 to 7, in which the ribbons (4, 5; 4', 5') are buried.

9. A method of making a structure (1; 1') having two light guides for an asymmetrical directional coupler, said structure comprising a bottom confinement layer (2), a light-guiding core (3; 3'), and two ribbons (4, 5;, 4', 5') for loading the core and forming the light guides, the thicknesses ($e_1$, $e_2$) of said ribbons being distinct from each other, said method comprising the step consisting in epitaxially depositing a succession of alternating thin layers respectively of binary material and of quaternary material in order to obtain, after etching the two ribbons, a core thickness and distinct thicknesses for each of the two ribbons such that they lead to light guides having the same birefringence.

10. A method according to claim 9, comprising the steps consisting in epitaxially depositing on a bottom confinement layer (2) of binary material, a massive layer of quaternary material (30; 30'), and then said succession of alternating thin layers (31, 32, 51, 52; 31', 32', 51', 52'), in measuring by photo-luminescence the wavelength ($\lambda_g$) of the forbidden band of the quaternary material, in making a mask, and then in etching the ribbons (4, 5; 4', 5') in said succession of alternating thin layers.

11. A method according to claim 9 or claim 10, including the step consisting in etching a coupling grating on one of the load ribbons (5; 5').

**Patentansprüche**

1. Struktur (1, 1') mit zwei optischen Leitern für einen asymmetrischen Richtungskoppler, welche geeignet ist, einen Filter zu bilden, wobei die Struktur eine untere Isolierschicht (2), einen Kern (3, 3') zum Leiten des Lichts sowie zwei Streifen (4, 5; 4', 5'), um den Kern (3, 3') zu laden und die optischen Leiter zu bilden, wobei die Dicken (e1, e2) der Streifen voneinander verschieden sind, aufweist, und die Dicke (h) des Kerns und die unterschiedlichen Dicken (e1, e2) der Streifen derart gewählt sind, dass die optischen Leiter die gleiche Doppelbrechung aufweisen.

2. Struktur gemäß Anspruch 1, wobei der Kern (3, 3') einen Stapel einer Folge von dünnen abwechselnden Schichten (31, 32; 31', 32') jeweils aus binärem Material und aus quaternärem Material aufweist.

3. Struktur gemäß einem der Ansprüche 1 oder 2, wobei die Ladungsstreifen (4, 5; 4', 5') einen Stapel einer Folge von dünnen abwechselnden Schichten (51, 52; 51', 52') jeweils aus binärem Material und aus quaternärem Material aufweisen.

4. Struktur gemäß einem der Ansprüche 2 oder 3, wobei die Dicke jeder dünnen Schicht kleiner oder gleich 200Å ist.

5. Struktur gemäß einem der Ansprüche 1 bis 4, wobei der Kern (3, 3') eine massive Schicht (30, 30') aus quaternärem Material aufweist.

6. Struktur gemäß einem der Ansprüche 2 bis 5, wobei das binäre Material InP und das quaternäre Material InGaAsP ist.

7. Struktur gemäß einem der Ansprüche 1 bis 6, wobei ein Koppelnetz auf einen (5, 5') der Streifen graviert ist.

8. Struktur gemäß einem der Ansprüche 1 bis 7, wobei die Streifen (4, 5; 4', 5') verdeckt sind.

9. Verfahren zur Herstellung einer Struktur (1, 1') mit zwei optischen Leitern für einen asymmetrischen Richtungskoppler, wobei die Struktur eine untere Isolierschicht (2), einen Kern (3, 3') zum Leiten des Lichts und zwei Streifen (4, 5; 4', 5'), um den Kern (3, 3') zu laden und die optischen Leiter zu bilden, wobei die Dicken (e1, e2) der Streifen voneinander verschieden sind, aufweist, wobei das Verfahren den Schritt aufweist, der darin besteht, durch Epitaxie eine Folge von abwechselnden dünnen Schichten, jeweils aus binärem Material und aus quaternärem Material, abzulagern, um , nach Gravieren der beiden Streifen eine Dicke des Kerns und unterschiedliche Dicken der beiden Streifen zu erhalten, so dass diese zu optischen Leitern mit gleicher Doppelbrechung führen.

10. Verfahren gemäß Anspruch 9, welches die Schritte aufweist, die aus Ablagern einer unteren Isolierschicht (2) aus binärem Material, einer massiven Schicht aus quaternärem Material (30, 30'), danach der Folge von dünnen abwechselnden Schichten (31, 32, 51, 52; 31', 32', 51', 52'), durch Photolumineszenz die Wellenlänge (λg) des verbotenen Bandes aus quaternärem Material zu messen, eine Maske herzustellen, dann die Streifen (4, 5; 4', 5') in der Folge von dünnen abwechselnden Schichten zu gravieren, bestehen.

11. Verfahren gemäß einem der Ansprüche 9 oder 10, welches den Schritt aufweist, der darin besteht, ein Koppelnetz auf einem (5, 5') der Ladungsstreifen zu gravieren.

*FIG.1*

*FIG.2*

*FIG.3*

$(N^{TE}-N^{TM}) \times 10^{-3}$

*FIG.4*

5.5

h=0.3μm          h=0.27μm

5.0

h=0.25μm

4.5          h=0.2μm

h=0.4μm

4.0

h=0.5μm

3.5          h=0.15μm

3.0
   0.01 / 0.03 / 0.05 / 0.07 /          e(μm)
     0.02   0.04   0.06   0.08 .

$(N^{TE}-N^{TM}) \times 10^{-3}$

*FIG.5*

h=0.28μm

5.20

h=0.27μm

5.15

5.10          h=0.26μm

$e_1$          $e_2$          e(μm)

   0.02        0.04        0.06
      0.03        0.05        0.07

dB

*FIG.8*

TE

5dB

TM

1260   1280   1300   1320   1340   1360   λ(nm)

# *FIG.9*

# *FIG.6*

# *FIG.7*